# EUROPEAN PATENT SPECIFICATION

(11) **EP 4 509 659 B1**
(45) Date of publication and mention of the grant of the patent: **17.06.2026**
(21) Application number: 24191450.6
(22) Date of filing: 29.07.2024
(51) Int. Cl.: E02F 9/08, E02F 3/32

(54) **WORK MACHINE**
ARBEITSMASCHINE
MACHINE DE TRAVAIL

(30) Priority: 01.08.2023 JP 2023125595
(43) Date of publication of application: 19.02.2025
(73) Proprietor: Yanmar Holdings Co., Ltd., Osaka-shi, Osaka (JP)
(72) Inventor: KITAHARA, Satoshi, Fukuoka (JP)
(74) Representative: Sekiguchi, Kazuya

(56) References cited:
- EP-A1- 4 063 570
- EP-A2- 2 840 189
- JP-A- 2019 218 784

## Description

### TECHNICAL FIELD

The present invention relates to a work machine. A device accordng to the prior art is disclosed in document EP2840189A2.

### BACKGROUND ART

Conventionally, there is known a turning work vehicle equipped with a so-called swing function in which a support portion for supporting a work machine in such a way as to be rotatable upward and downward is horizontally rotated (see, for example, Patent Document 1).

The turning work vehicle disclosed in Patent Document 1 includes a lower traveling body and an upper turning body provided in such a way as to be turnable above the lower traveling body. A swing body supported in a horizontally rotatable manner is provided at a front portion of a turning frame constituting a bottom portion of the upper turning body. The swing body supports the work machine in such a way as to be rotatable upward and downward. On a bottom plate of the turning frame, a first vertical plate and a second vertical plate, which are erected in such a way as to be located at intervals on left and right sides and to extend in the front-and-rear direction, are disposed. A hydraulic type swing cylinder is provided on the opposite side of the first vertical plate across the second vertical plate, and couples the turning frame and the swing body.

### PRIOR ART DOCUMENT

### PATENT DOCUMENT

Patent Document 1: Japanese Unexamined Patent Application Publication No. 2019-218784

### SUMMARY OF INVENTION

### TECHNICAL PROBLEM

A hydraulic pump that pressure-feeds oil to a hydraulic type actuator such as a swing cylinder may be driven by an electric motor. With such a configuration, the battery unit for supplying electric power to the electric motor is mounted on the turning frame. When the storage capacity of the battery unit is increased, the battery unit occupies a wide area on the turning frame.

Since the battery unit has a large weight, it is considered to be advantageous to dispose the battery unit closer to the center of the turning frame whose strength is improved by disposing the first vertical plate and the second vertical plate that are described above. In such a configuration, members such as the electric motor and the hydraulic pump are disposed on a side of the battery unit, and there is a possibility that interference between at least a part of these members and the swing cylinder becomes a problem.

In view of the above, an object of the present invention is to provide a technique capable of appropriately laying out a hydraulic cylinder in a work machine having a swing function utilizing the hydraulic cylinder.

### SOLUTION TO PROBLEM

An exemplary work machine according to the present invention is a work machine including a turning body in front of which a work device is disposed, and the work machine including: a turning frame constituting a bottom portion of the turning body; a first vertical plate and a second vertical plate that extend from a front side to a rear side on the turning frame and are disposed at intervals on left and right sides; a swing body that is horizontally rotatably supported by the turning frame in front of the first vertical plate and the second vertical plate and that supports the work device; a hydraulic cylinder that is disposed on an outer side of a machine body on a side opposite to the second vertical plate side with respect to the first vertical plate on the turning frame, and that has one end portion coupled to the swing body; and an auxiliary vertical plate that is disposed between the first vertical plate and the hydraulic cylinder on the turning frame and coupled to an other end portion of the hydraulic cylinder.

### ADVANTAGEOUS EFFECTS OF INVENTION

According to the exemplary present invention, in a work machine having a swing function using a hydraulic cylinder, the hydraulic cylinder can be appropriately laid out.

### BRIEF DESCRIPTION OF DRAWINGS

FIG. 1 is a perspective view illustrating a schematic configuration of a work machine.
FIG. 2 is a perspective view illustrating a schematic configuration of the inside of a turning body.
FIG. 3 is a schematic plan view of the configuration illustrated in FIG. 2 as viewed from above.
FIG. 4 is a side view illustrating a schematic relationship between an auxiliary vertical plate, a swing cylinder, and a first vertical plate.
FIG. 5 is a perspective view illustrating a schematic relationship between the swing cylinder and a hydraulic oil tank on a turning frame.
FIG. 6 is a perspective view illustrating a schematic relationship between the swing cylinder and the hydraulic oil tank on the turning frame.

### DESCRIPTION OF EMBODIMENTS

Hereinafter, an exemplary embodiment of the present invention will be explained in detail with reference to the drawings. Note that, in the drawings, the same or corresponding parts are denoted by the same reference numerals, and explanation thereof will not be repeated unless otherwise required.

### <1. Schematic Configuration of Work Machine>

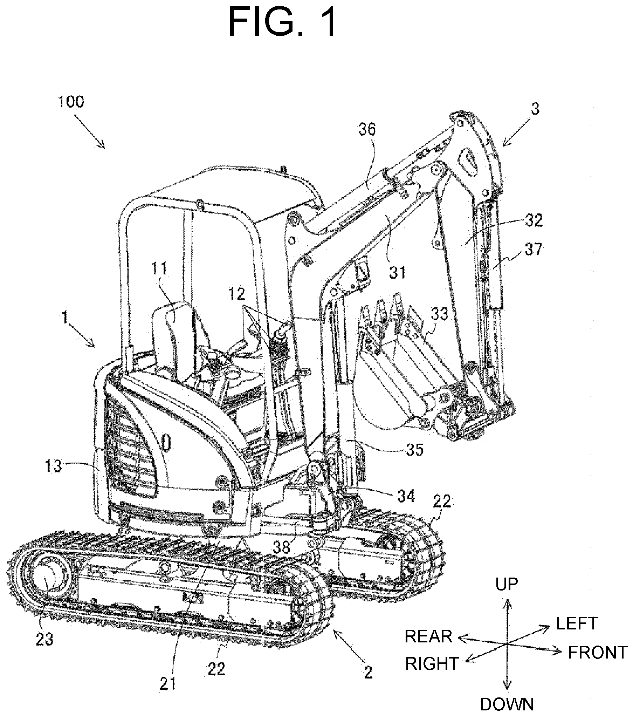

FIG. 1 is a perspective view illustrating a schematic configuration of a work machine 100 according to an embodiment of the present invention. The work machine 100 is specifically a hydraulic excavator. The work machine 100 may be, for example, a small-sized hydraulic excavator. The work machine according to the present invention is not limited to a hydraulic excavator. The present invention is widely applicable to a work machine (turning work machine) including a turning body.

As illustrated in FIG. 1, the work machine 100 includes a turning body 1, a traveling body 2, and a work device 3.

In the present specification, a front-and-rear direction is defined on the assumption that a side on which the work device 3 is located with respect to the turning body 1 is "front". Further, a gravity direction perpendicular to the front-and-rear direction is defined as an up-and-down direction, an upstream side in the gravity direction is defined as "up", and a downstream side in the gravity direction is defined as "down". A direction perpendicular to the front-and-rear direction and the up-and-down direction is defined as a left-and-right direction, and as viewed from the rear toward the front, a left side is defined as "left" and a right side is defined as "right". A plane parallel to the front-and-rear direction and the left-and-right direction is defined as a horizontal plane, and a plane orthogonal to the horizontal plane is a vertical plane. Although the direction of the turning body 1 is not fixed because the turning body 1 turns around, the expression of the direction is used on the assumption that the turning body 1 is fixed in the direction illustrated in FIG. 1. In addition, the directions defined herein are merely names used for explanation, and are not intended to limit the actual positional relationship and directions.

The turning body 1 is provided in such a way as to be turnable about an axis extending in the up-and-down direction at a central portion thereof. In the present embodiment, the turning body 1 is turnably supported by the traveling body 2 disposed below the turning body 1. The turning body 1 is driven to turn by a turning motor, which is not illustrated, constituted as a hydraulic motor. The turning body 1 is provided in such a way as to be capable of turning to the right and turning to the left. The work device 3 is disposed in front of the turning body 1. Namely, the work machine 100 includes the turning body 1 in front of which the work device 3 is disposed.

The turning body 1 is provided with a driver's seat 11 on which an operator who operates the work machine 100 sits. An operator sitting on the driver's seat 11 faces forward and operates various operation devices provided around the driver's seat 11. In the present embodiment, the operation device includes an operation lever 12. The driver's seat 11 is supported by a cover (not illustrated) that covers various members disposed inside the turning body 1 (an engine room). Various members disposed inside the turning body 1 will be described below. In addition, a counterweight 13 is disposed at a rear end portion of the turning body 1.

The traveling body 2 enables the work machine 100 to travel by itself. Specifically, the traveling body 2 includes a pair of crawlers 22 disposed on the left and right of a traveling body frame 21. Each of the crawlers 22 is driven by a traveling motor 23 constituted by a hydraulic motor. When the pair of left and right crawlers 22 are simultaneously driven in the same direction, the traveling body 2 travels straight forward or rearward. The forward or backward is determined by a rotational direction of the traveling motor 23. The pair of left and right crawlers 22 are independently driven, whereby the traveling body 2 performs a left turn or a right turn.

Note that although the traveling body 2 in the present embodiment is a crawler type, the traveling body is not limited to the crawler type and may be a wheel type or the like. Further, a blade for ground leveling work may be provided at a front portion or a rear portion of the traveling body 2.

The work device 3 includes a boom 31, an arm 32, and a bucket 33. The work device 3 performs excavation work of earth and sand or the like by moving the boom 31, the arm 32, and the bucket 33 simultaneously or independently. Note that the bucket 33 may be replaced with another work tool such as a breaker, which is utilized when a demolishing work is performed, for example.

The boom 31, one end portion of which is supported by a boom bracket 34, is rotatable in a vertical plane (rotatable upward and downward). The boom bracket 34 is supported by the turning body 1. The boom 31 is bent at an intermediate portion and has a V-shape in a side view. The boom 31 is rotated by expansion and contraction of a boom cylinder 35 whose one end is coupled to the boom bracket 34 and an other end is coupled to an intermediate portion of the boom 31.

One end portion of the arm 32 is supported by an other end portion of the boom 31 in such a way as to be rotatable in a vertical plane. The arm 32 is rotated by expansion and contraction of an arm cylinder 36 whose one end is coupled to an intermediate portion of the boom 31 and an other end is coupled to one end portion of the arm 32. One end portion of the bucket 33 is supported by an other end portion of the arm 32 in such a way as to be rotatable in a vertical plane. The bucket 33 is rotated by expansion and contraction of a bucket cylinder 37 whose one end is coupled to the one end portion of the arm 32 and an other end is coupled to the bucket 33. In FIG. 1, the boom 31, the arm 32, and the bucket 33 are each provided in such a way as to be rotatable about an axis (not illustrated) extending in the left-and-right direction.

The boom bracket 34 is specifically supported by the turning body 1 in such a way as to be rotatable in a horizontal plane (horizontally rotatable). In other words, the boom bracket 34 is rotatable about an axis (not illustrated) extending in the up-and-down direction. The boom bracket 34 is rotated counterclockwise or clockwise by expansion and contraction of a swing cylinder 38 whose one end is coupled to the boom bracket 34 and an other end is coupled to the turning body 1. Namely, the action of the swing cylinder 38 allows the work device 3 to swing counterclockwise or clockwise.

The boom cylinder 35, the arm cylinder 36, the bucket cylinder 37, and the swing cylinder 38 are all hydraulic type cylinders, and are included in a hydraulic actuator of the work machine 100. The hydraulic actuator of the work machine 100 also includes the above-described traveling motor 23 and a turning motor (not illustrated). An operator sitting on the driver's seat 11 can perform work using the work device 3 by operating the operation lever 12 described above and thereby controlling the hydraulic actuator.

### <2. Configuration of Turning Body>

### [2-1. Overview of Inside of Turning Body]

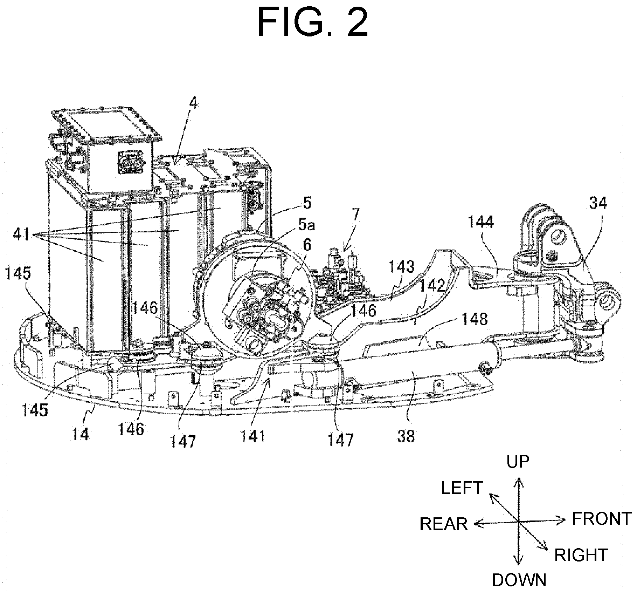

FIG. 2 is a perspective view illustrating a schematic configuration of the inside of the turning body 1. As illustrated in FIG. 2, the turning body 1 includes a turning frame 14 at a bottom portion thereof. In other words, the work machine 100 includes the turning frame 14 that constitutes the bottom portion of the turning body 1. The turning frame 14 is composed of a plate-like member. Various members are mounted on the turning frame 14.

As illustrated in FIG. 2, a battery unit 4, an electric motor 5, a hydraulic pump 6, and a control valve 7 are disposed on the turning frame 14. Namely, the work machine 100 includes a battery unit 4, an electric motor 5, a hydraulic pump 6, and a control valve 7. The work machine 100 includes the battery unit 4, the electric motor 5, the hydraulic pump 6, and the control valve 7, which are disposed on the turning frame 14.

In addition, an other end portion of the swing cylinder 38 described above is coupled to the turning frame 14, and the swing cylinder 38 is disposed therein, which will be described later.

### (2-1-1. Turning Frame)

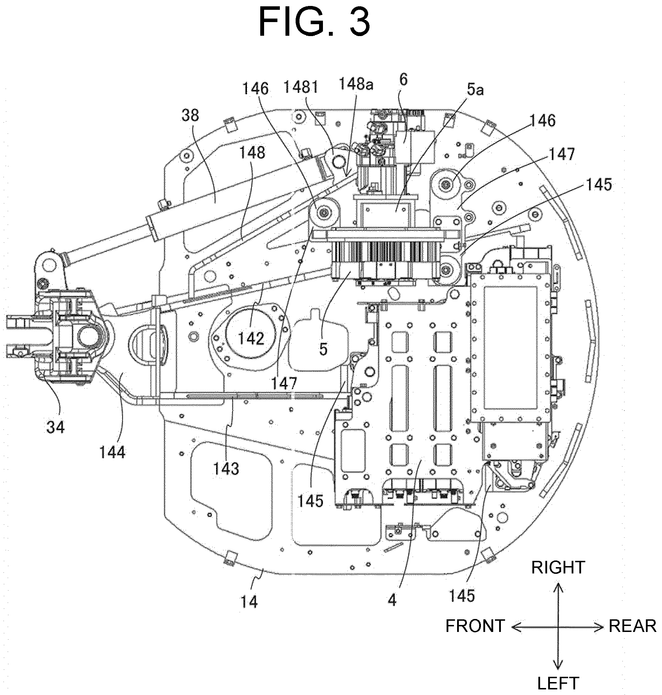

FIG. 3 is a schematic plan view of the configuration illustrated in FIG. 2 as viewed from above. As illustrated in FIGS. 2 and 3, the turning frame 14 includes a first vertical plate 142 and a second vertical plate 143. Namely, the work machine 100 includes a first vertical plate 142 and a second vertical plate 143. By providing the first vertical plate 142 and the second vertical plate 143, the strength of the turning frame 14 can be enhanced.

The first vertical plate 142 and the second vertical plate 143 are provided in a plate shape, and are erected at a central portion in the left-and-right direction of an upper surface of the turning frame 14. The first vertical plate 142 and the second vertical plate 143 extend from the front to the rear on the turning frame 14, and are disposed at intervals in the left-and-right direction. Specifically, the first vertical plate 142 is disposed on the right side, and the second vertical plate 143 is disposed on the left side. However, this is merely an example, and the first vertical plate 142 may be on the left side and the second vertical plate 143 may be on the right side. The first vertical plate 142 and the second vertical plate 143 have an inclined structure in which the height in the up-and-down direction on the rear side is lower than that on the front side. The first vertical plate 142 and the second vertical plate 143 are the same member integrated with the turning frame 14.

A bracket support portion 144 that supports the boom bracket 34 in a horizontally rotatable manner is provided at a central portion in the left-and-right direction of a front end portion of the turning frame 14. Front end portions of the first vertical plate 142 and the second vertical plate 143 are fixed to the bracket support portion 144. The boom bracket 34 that rotatably supports the boom 31 of the work device 3 is an example of the swing body in the present invention. Namely, the work machine 100 includes the swing body 34 that is horizontally rotatably supported by the turning frame 14 in front of the first vertical plate 142 and the second vertical plate 143 and supports the work device 3.

### (2-1-2. Battery Unit)

The battery unit 4 includes at least one battery 41. The battery 41 is composed of, for example, a secondary battery such as a lithium ion battery. In the present embodiment, as illustrated in FIG. 2, the battery unit 4 includes a plurality of batteries 41. The plurality of batteries 41 may be connected in series or in parallel. Further, for example, some of the plurality of batteries 41 may be connected in series, and some of the batteries 41 connected in series may be connected in parallel. In the present embodiment, the number of batteries 41 is four. Two each of the four batteries 41 are connected in series, and the two batteries 41 connected in series are connected in parallel.

The work machine 100 includes a power feeder (not illustrated) that converts electric power supplied from an AC power supply (such as a commercial power supply) outside the work machine 100 from AC power to DC power. The battery unit 4 can be charged by being supplied with electric power from the power feeder. Further, the battery unit 4 can supply electric power to various loads included in the work machine 100, such as the electric motor 5.

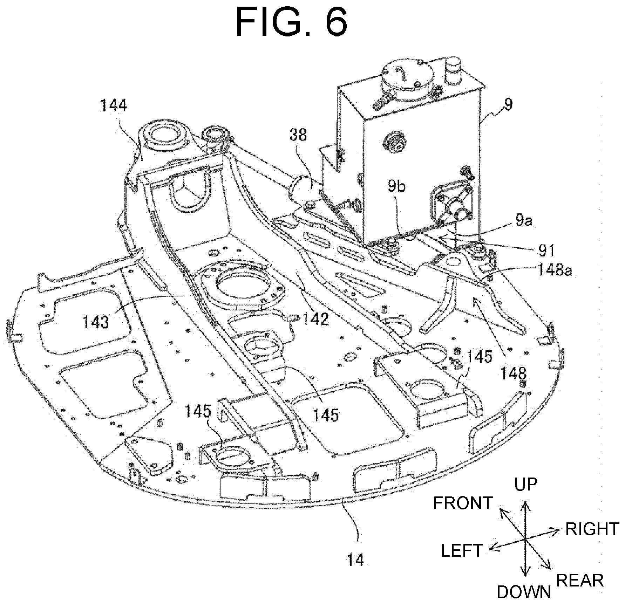

As illustrated in FIGS. 2 and 3, a battery unit support base 145 is provided on the upper surface of the turning frame 14 (see also FIG. 6, etc.). The battery unit support base 145 is the same member integrated with the turning frame 14. In the present embodiment, the battery unit support base 145 is divided into a plurality of parts, but may be formed of a single part. The battery unit 4 is supported by the battery unit support base 145 via a vibration isolating member 146. The vibration isolating member 146 is constituted by, for example, a rubber member.

The battery unit 4 supported by the battery unit support base 145 is disposed substantially at the center in the left-right direction of the turning frame 14, and in detail disposed so as to be slightly shifted to the left side from the center. Further, the battery unit 4 supported by the battery unit support base 145 is disposed slightly closer to the rear side from the center in the front-and-rear direction of the turning frame 14. As illustrated in FIG. 3, the battery unit 4 overlaps with the second vertical plate 143 in a plan view. The battery unit 4 is on the upper side with respect to the second vertical plate 143. As can be seen from the above, the battery unit 4 is disposed closer to the center of the turning frame 14, where the first vertical plate 142 and the second vertical plate 143 are disposed and the strength is thereby increased.

### (2-1-3. Electric Motor)

The electric motor 5 uses electric power of the battery unit 4 as a power supply. Namely, the electric motor 5 is driven by the electric power supplied from the battery unit 4. In the present embodiment, the electric motor 5 is a three phase AC motor whose rotational speed is determined by a rotating magnetic field. Specifically, electric power is supplied from the battery unit 4 to an inverter device, which is not illustrated. The inverter device converts DC power supplied from the battery unit 4 into AC power, and supplies the AC power to the electric motor 5.

As illustrated in FIGS 2 and 3, a motor support base 147 is provided on the upper surface of the turning frame 14. In the present embodiment, the motor support base 147 is divided into a plurality of parts, but may be formed of a single part. The electric motor 5 is supported by the motor support base 147. The motor support base 147 is supported by the turning frame 14 via the vibration isolating member 146. The electric motor 5 supported by the motor support base 147 is disposed adjacent to one side (the right side in the present embodiment) of the battery unit 4 in the left-right direction. As illustrated in FIG. 3, the electric motor 5 overlaps the first vertical plate 142 in a plan view. Note that the electric motor 5 is located above with respect to the first vertical plate 142. As can be seen from the above, the electric motor 5 which is heavy in weight is disposed at a position relatively close to the central portion of the turning frame 14 in the left-and-right direction, where the first vertical plate 142 and the second vertical plate 143 are disposed and the strength is thereby increased.

### (2-1-4. Hydraulic Pump)

The hydraulic pump 6 is driven by the electric motor 5. The hydraulic pump 6 driven by the electric motor 5 pressure-feeds hydraulic oil to the above-described hydraulic actuators (hydraulic cylinders 35 to 38, a hydraulic motor 23, and the like).

The hydraulic pump 6 is specifically disposed on the right of and adjacent to the electric motor 5. The hydraulic pump 6 is coupled to a coupling body 5a provided at a right end of the electric motor 5. In detail, the motor support base 147 supports the coupling body 5a. The hydraulic pump 6 is disposed on an outer side of the machine body on a side opposite to the second vertical plate 143 side (the right side in the present embodiment) with respect to the first vertical plate 142. It is possible to improve the balance of the work machine 100 by disposing a member lighter than a heavy object such as the battery unit 4 on the outer side of the machine body.

### (2-1-5. Control valve)

The control valve 7 is interposed between the hydraulic pump 6 and the hydraulic actuators (the hydraulic cylinders 35 to 38, the hydraulic motor 23, and the like). The control valve 7 is a control valve that is operated by the operation lever 12 and controls a flow of the hydraulic oil supplied from the hydraulic pump 6 to the hydraulic actuator. The control valve 7 specifically controls a flow direction and a flow rate of the hydraulic oil.

More specifically, the control valve 7 is an assembly of a plurality of hydraulic switching valves. The control valve 7 switches the supply and discharge of the hydraulic oil to and from the hydraulic cylinders 35 to 38, the hydraulic motor 23, and the like which are included in the hydraulic actuators, thereby controlling the actions thereof. The control valve 7 is disposed on the outer side of the machine body on the side opposite to the first vertical plate 142 side (the left side in the present embodiment) with respect to the second vertical plate 143. It is possible to improve the balance of the work machine 100 by disposing a member lighter than a heavy object such as the battery unit 4 on the outer side of the machine body.

### [2-2. Layout of Swing cylinder]

Next, a layout of the swing cylinder 38, which is one of the hydraulic cylinders included in the work machine 100, will be explained.

As illustrated in FIG. 3, the swing cylinder 38 is disposed on the outer side of the machine body on the side opposite to the second vertical plate 143 side (the right side in the present embodiment) with respect to the first vertical plate 142, on the turning frame 14. As described above, one end portion (front end portion) of the swing cylinder 38 is coupled to the boom bracket (swing body) 34. Namely, the work machine 100 includes a hydraulic cylinder 38 that is disposed on the outer side of the machine body on the side opposite to the second vertical plate 143 side with respect to the first vertical plate 142, on the turning frame 14 and that has one end portion coupled to the swing body 34. One end portion of the swing cylinder 38 is coupled to the boom bracket 34 in such a way as to be horizontally rotatable.

As illustrated in FIG. 3, the work machine 100 includes an auxiliary vertical plate 148 disposed between the first vertical plate 142 and the swing cylinder (hydraulic cylinder) 38 on the turning frame 14. Specifically, the auxiliary vertical plate 148 is disposed on the right side of the first vertical plate 142 and on the left side of the swing cylinder 38. The auxiliary vertical plate 148 is disposed on the outer side of the machine body with respect to the first vertical plate 142, and is disposed on the inner side of the machine body with respect to the swing cylinder 38.

The auxiliary vertical plate 148 is provided in a plate shape, and is erected on the upper surface of the turning frame 14. The auxiliary vertical plate 148 is the same member integrated with the turning frame 14. The auxiliary vertical plate 148 extends from the front to the rear on the turning frame 14. The auxiliary vertical plate 148 is disposed so as to be inclined with respect to the first vertical plate 142 similarly extending from the front to the rear. The auxiliary vertical plate 148 separates from the first vertical plate 142 to the outer side of the machine body (to the right side in the present embodiment) as it goes from the front to the rear. The front side of the auxiliary vertical plate 148 is bent toward the inner side of the machine body (left side) and is directed to the first vertical plate 142. In detail, a front end portion of the auxiliary vertical plate 148 is connected to the first vertical plate 142. Thus, the strength of the auxiliary vertical plate 148 can be increased.

The auxiliary vertical plate 148 is coupled to an other end portion (rear end portion) of the swing cylinder (hydraulic cylinder) 38. In other words, an other end portion of the swing cylinder 38 is supported by the auxiliary vertical plate 148. Note that an other end portion of the swing cylinder 38 is coupled to the auxiliary vertical plate 148 in such a way as to be horizontally rotatable. With such a configuration, the swing cylinder 38 can be supported further on the outer side of the machine body from the auxiliary vertical plate 148 disposed on the outer side of the machine body than the first vertical plate 142. Therefore, the swing cylinder 38 can be easily disposed on the turning frame 14 while avoiding interference with other devices.

In particular, in the present embodiment, the electric motor 5 is disposed at a position overlapping the first vertical plate 142 in a plan view. However, according to the configuration of the present embodiment, the swing cylinder 38 can be disposed in such a way as to avoid interference with the electric motor 5.

In the present embodiment, as illustrated in FIG. 3, the hydraulic pump 6 overlaps the auxiliary vertical plate 148 in a plan view. The hydraulic pump 6 is on the upper side with respect to the auxiliary vertical plate 148. The hydraulic pump 6 is smaller in size than the electric motor 5, and further, s not directly supported by the turning frame 14. By disposing the auxiliary vertical plate 148 for supporting the swing cylinder 38 below such equipment. the battery unit 4 and the electric motor 5, which are heavy and require firm support can be supported in a wide range on the center side of the turning frame 14 having high strength. As a result, it is possible to install the battery unit 4 having a large storage capacity.

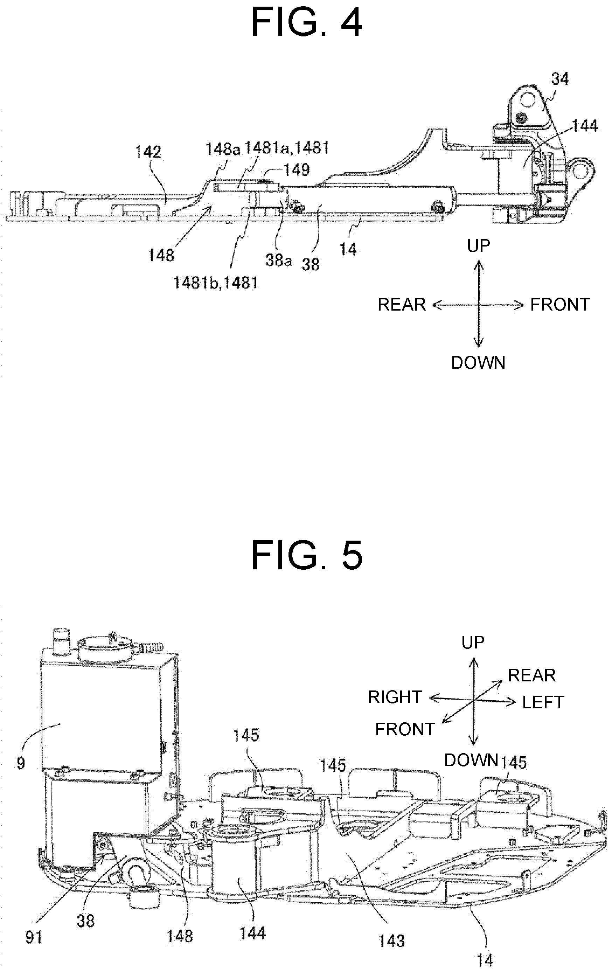

FIG. 4 is a side view illustrating a schematic relationship between the auxiliary vertical plate 148, and the swing cylinder 38 and the first vertical plate 142. FIG. 4 is a diagram of the turning frame 14 as viewed from the right side. As illustrated in FIG. 4, the auxiliary vertical plate 148 includes a coupling portion 148a having a coupling structure 1481 for coupling an other end portion (rear end portion) of the swing cylinder (hydraulic cylinder) 38. The auxiliary vertical plate 148 includes the coupling portion 148a at its rear end portion.

In detail, the coupling structure 1481 includes an upper plate-like body 1481a and a lower plate-like body 1481b disposed below with respect to the upper plate-like body 1481a. The upper plate-like body 1481a and the lower plate-like body 1481b protrude from the coupling portion 148a (auxiliary vertical plate 148) to the outer side of the machine body. Specifically, the upper plate-like body 1481a and the lower plate-like body 1481b protrude rightward from the right side surface of the coupling portion 148a and extend in the horizontal direction. The upper plate-like body 1481a and the lower plate-like body 1481b are disposed at an interval in the up-and-down direction. A rear end portion 38a of the swing cylinder 38 is disposed between the upper plate-like body 1481a and the lower plate-like body 1481b in the up-and-down direction. The rear end portion 38a of the swing cylinder 38 is coupled to the upper plate-like body 1481a and the lower plate-like body 1481b via a pin member 149, which penetrates the plate-like bodies in the up-and-down direction, in such a way as to be horizontally rotatable.

As illustrated in FIG. 4, in a side view in the left-and-right direction, the coupling portion 148a protrudes upward with respect to the first vertical plate 142. The coupling portion 148a that couples an other end portion (rear end portion) of the swing cylinder 38 is likely to increase in height in the up-and-down direction because the coupling structure 1481 is provided. Therefore, if a coupling portion having a coupling structure is provided on the first vertical plate 142 existing inside the machine body, interference with the electric motor 5 or the like becomes a problem. In this regard, in the present embodiment, the coupling portion 148a is provided on the auxiliary vertical plate 148 disposed on the outer side of the machine body than the first vertical plate 142. Therefore, the swing cylinder 38 can be disposed on the turning frame 14 while avoiding interference with large-sized equipment such as the electric motor 5 disposed on the inner side of the machine body.

In the present embodiment, as illustrated in FIG. 3, the swing cylinder (hydraulic cylinder) 38 is disposed in front of the hydraulic pump 6. Thus, the swing cylinder 38 can be disposed in such a way as to avoid the electric motor 5 and the battery unit 4 which are disposed on the inner side of the machine body (the left side in the present embodiment) than the hydraulic pump 6.

FIGS. 5 and 6 are perspective views illustrating a schematic relationship between the swing cylinder 38 and the hydraulic oil tank 9 on the turning frame 14. FIG. 5 is a view as seen obliquely from the forward left. FIG. 6 is a view as seen obliquely from the rearward left. As can be seen with reference to FIGS. 3, 5, and 6, the hydraulic oil tank 9 is disposed in front of the hydraulic pump 6. The hydraulic oil tank 9 is a tank that stores the hydraulic oil discharged by the hydraulic pump 6. Namely, the work machine 100 includes a hydraulic oil tank 9 that stores the hydraulic oil discharged by the hydraulic pump 6, in front of the hydraulic pump 6.

The hydraulic oil in the hydraulic oil tank 9 is sent to the control valve 7 by driving the hydraulic pump 6. The hydraulic oil sent to the control valve 7 is sent to the hydraulic actuators (the hydraulic cylinders 35 to 38, the hydraulic motor 23, and the like) under the control of the control valve 7. Of the hydraulic oil sent to the control valve 7, a portion of the hydraulic oil that is not sent to the hydraulic actuator, is returned to the hydraulic oil tank 9. The hydraulic oil sent to the hydraulic actuator is returned from the hydraulic actuator to the hydraulic oil tank 9 via an oil cooler that is not illustrated.

As illustrated in FIGS. 5 and 6, the swing cylinder (hydraulic cylinder) 38 passes through a notch portion 91 provided in the hydraulic oil tank 9. With such a configuration, the space on the turning frame 14 can be efficiently utilized. The notch portion 91 is specifically provided in a lower portion of the hydraulic oil tank 9. The notch portion 91 is formed by positioning a left side wall to the right and positioning a bottom wall upward in a part of the lower side of the hydraulic oil tank 9.

The swing cylinder (hydraulic cylinder) 38 is disposed between the auxiliary vertical plate 148 and a side wall 9a of the part of the hydraulic oil tank 9 where the notch portion 91 is provided. Note that the side wall 9a corresponds to the left side wall in the lower portion of the hydraulic oil tank 9, and is positioned on the outer side (right side) of the machine body with respect to the auxiliary vertical plate 148. The swing cylinder 38 is disposed between the right surface of the auxiliary vertical plate 148 and the side wall 9a in the left-and-right direction.

The auxiliary vertical plate 148 supports a bottom wall 9b of the part of the hydraulic oil tank 9 where the notch portion 91 is provided. In detail, the auxiliary vertical plate 148 supports a left end portion of the bottom wall 9b. With such a configuration, the auxiliary vertical plate 148 can be provided with not only a function of supporting the swing cylinder 38 but also a function of supporting the hydraulic oil tank 9. Namely, with such a configuration, the number of elements (support members) disposed on the turning frame 14 can be reduced, and equipment can be efficiently disposed on the turning frame 14.

### <3. Notes and the like>

Various technical features disclosed in the present specification can be changed in various ways without departing from the spirit of the technical creation thereof. In addition, the plurality of embodiments and modifications described in the present specification may be achieved in combination to the extent possible.

### <4. Appendices>

An exemplary work machine of the present invention may be a work machine including a turning body in front of which a work device is disposed, and the work machine may have such a configuration (first configuration) that includes: a turning frame constituting a bottom portion of the turning body; a first vertical plate and a second vertical plate that extend from a front side to a rear side on the turning frame and disposed at intervals on left and right sides; a swing body that is horizontally rotatably supported by the turning frame in front of the first vertical plate and the second vertical plate and that supports the work device; a hydraulic cylinder that is disposed on an outer side of a machine body on a side opposite to the second vertical plate side with respect to the first vertical plate on the turning frame, and that has one end coupled to the swing body; and an auxiliary vertical plate that is disposed between the first vertical plate and the hydraulic cylinder on the swing frame and coupled to an other end portion of the hydraulic cylinder.

The work machine according to the above-described first configuration may have a configuration (second configuration) in which the auxiliary vertical plate includes a coupling portion having a coupling structure for coupling an other end portion of the hydraulic cylinder, and the coupling portion protrudes upward with respect to the first vertical plate in a side view in a left-and-right direction.

The work machine according to the above-described first or second configuration may have a configuration (third configuration) in which a front end portion of the auxiliary vertical plate is connected to the first vertical plate.

The work machine according to any one of the above-described first to third configurations may have such a configuration (fourth configuration) that further includes: a battery unit that overlaps the second vertical plate in a plan view; an electric motor that uses electric power of the battery unit as a power supply and overlaps the first vertical plate in a plan view; and a hydraulic pump that is driven by the electric motor and overlaps the auxiliary vertical plate in a plan view.

The work machine according to the above-described fourth configuration may have a configuration (fifth configuration) in which the hydraulic cylinder is disposed in front of the hydraulic pump.

The work machine according to the above-described fifth configuration may have such a configuration (sixth configuration) that further includes, in front of the hydraulic pump, a hydraulic oil tank that stores hydraulic oil discharged by the hydraulic pump, in which the hydraulic cylinder passes through a notch portion provided in the hydraulic oil tank.

The work machine according to the above-described sixth configuration may have a configuration (seventh configuration) in which the hydraulic cylinder is disposed between the auxiliary vertical plate and a side wall of a part of the hydraulic oil tank, the part being provided with the notch portion.

The work machine according to the above-described seventh configuration may have a configuration (eighth configuration) in which the auxiliary vertical plate supports a bottom wall of a part of the hydraulic oil tank, the part being provided with the notch portion.

### REFERENCE SIGNS LIST

1 TURNING BODY
3 WORK DEVICE
4 BATTERY UNIT
5 ELECTRIC MOTOR
6 HYDRAULIC PUMP
9 HYDRAULIC OIL TANK
14 TURNING FRAME
34 BOOM BRACKET (SWING BODY)
38 SWING CYLINDER (HYDRAULIC CYLINDER)
91 NOTCH PORTION
100 WORK MACHINE
142 FIRST VERTICAL PLATE
148 AUXILIARY VERTICAL PLATE
148a COUPLING PORTION
1481 COUPLING STRUCTURE

## Claims

1. A work machine (1) including a turning body in front of which a work device (3) is disposed, the work machine comprising:
a turning frame (14) constituting a bottom portion of the turning body;
a first vertical plate (142) and a second vertical plate (143) that extend from a front side to a rear side on the turning frame and that are disposed at intervals on left and right sides;
a swing body that is horizontally rotatably supported by the turning frame in front of the first vertical plate and the second vertical plate and that supports the work device;
a hydraulic cylinder (38) that is disposed on an outer side of a machine body on a side opposite to the second vertical plate side with respect to the first vertical plate on the turning frame, and that has one end portion coupled to the swing body; and
an auxiliary vertical plate (148) disposed between the first vertical plate and the hydraulic cylinder on the turning frame and coupled to an other end portion of the hydraulic cylinder.

2. The work machine according to claim 1, wherein
the auxiliary vertical plate includes a coupling portion having a coupling structure for coupling an other end portion of the hydraulic cylinder, and
the coupling portion protrudes upward with respect to the first vertical plate in a side view in a left-and-right direction.

3. The work machine according to claim 1 or 2, wherein a front end portion of the auxiliary vertical plate is connected to the first vertical plate.

4. The work machine according to claim 1, further comprising:
a battery unit that overlaps the second vertical plate in a plan view;
an electric motor that uses electric power of the battery unit as a power supply and overlaps the first vertical plate in a plan view; and
a hydraulic pump that is driven by the electric motor and overlaps the auxiliary vertical plate in a plan view.

5. The work machine according to claim 4, wherein the hydraulic cylinder is disposed in front of the hydraulic pump.

6. The work machine according to claim 5, further comprising, in front of the hydraulic pump, a hydraulic oil tank that stores hydraulic oil discharged by the hydraulic pump,
wherein the hydraulic cylinder passes through a notch portion provided in the hydraulic oil tank.

7. The work machine according to claim 6, wherein the hydraulic cylinder is disposed between the auxiliary vertical plate and a side wall of a part of the hydraulic oil tank, the part being provided with the notch portion.

8. The work machine according to claim 7, wherein the auxiliary vertical plate supports a bottom wall of a part of the hydraulic oil tank, the part being provided with the notch portion.

## Patentansprüche

1. Arbeitsmaschine (1), die einen Drehkörper aufweist, vor dem eine Arbeitsvorrichtung (3) angeordnet ist, wobei die Arbeitsmaschine umfasst:
einen Drehrahmen (14), der einen unteren Abschnitt des Drehkörpers bildet;
eine erste vertikale Platte (142) und eine zweite vertikale Platte (143), die sich von einer Vorderseite zu einer Rückseite an dem Drehrahmen erstrecken und die in Intervallen auf der linken und der rechten Seite angeordnet sind;
einen Schwenkkörper, der durch den Drehrahmen vor der ersten vertikalen Platte und der zweiten vertikalen Platte horizontal drehbar gestützt ist und der die Arbeitsvorrichtung stützt;
einen Hydraulikzylinder (38), der an einer Außenseite eines Maschinenkörpers auf einer Seite gegenüber der Seite der zweiten vertikalen Platte in Bezug auf die erste vertikale Platte an dem Drehrahmen angeordnet ist und von dem ein Endabschnitt mit dem Schwenkkörper gekoppelt ist; und
eine vertikale Hilfsplatte (148), die zwischen der ersten vertikalen Platte und dem Hydraulikzylinder an dem Drehrahmen angeordnet ist und die mit einem anderen Endabschnitt des Hydraulikzylinders gekoppelt ist.

2. Arbeitsmaschine nach Anspruch 1, wobei
die vertikale Hilfsplatte einen Kopplungsabschnitt aufweist, der eine Kopplungsstruktur zum Koppeln eines anderen Endabschnitts des Hydraulikzylinders aufweist, und
der Kopplungsabschnitt in einer Seitenansicht in einer Links-Rechts-Richtung in Bezug auf die erste vertikale Platte nach oben vorsteht.

3. Arbeitsmaschine nach Anspruch 1 oder 2, wobei ein vorderer Endabschnitt der vertikalen Hilfsplatte mit der ersten vertikalen Platte verbunden ist.

4. Arbeitsmaschine nach Anspruch 1, ferner umfassend:
eine Batterieeinheit, die die zweite vertikale Platte in einer Draufsicht überlappt;
einen Elektromotor, der elektrische Energie der Batterieeinheit als eine Stromversorgung verwendet und die erste vertikale Platte in einer Draufsicht überlappt; und
eine Hydraulikpumpe, die durch den Elektromotor angetrieben wird und die vertikale Hilfsplatte in einer Draufsicht überlappt.

5. Arbeitsmaschine nach Anspruch 4, wobei der Hydraulikzylinder vor der Hydraulikpumpe angeordnet ist.

6. Arbeitsmaschine nach Anspruch 5, die ferner vor der Hydraulikpumpe einen Hydrauliköltank umfasst, der Hydrauliköl speichert, das durch die Hydraulikpumpe abgegeben wird,
wobei der Hydraulikzylinder durch einen Ausnehmungsabschnitt hindurch verläuft, der in dem Hydrauliköltank bereitgestellt ist.

7. Arbeitsmaschine nach Anspruch 6, wobei der Hydraulikzylinder zwischen der vertikalen Hilfsplatte und einer Seitenwand eines Teils des Hydrauliköltanks angeordnet ist, wobei der Teil mit dem Ausnehmungsabschnitt versehen ist.

8. Arbeitsmaschine nach Anspruch 7, wobei die vertikale Hilfsplatte eine Bodenwand eines Teils des Hydrauliköltanks stützt, wobei der Teil mit dem Ausnehmungsabschnitt versehen ist.

## Revendications

1. Machine de travail (1) incluant un corps rotatif en face duquel un dispositif de travail (3) est disposé, la machine de travail comprenant :
un cadre rotatif (14) constituant une partie inférieure du corps rotatif ;
une première plaque verticale (142) et une deuxième plaque verticale (143) qui s'étendent depuis un côté avant jusqu'à un côté arrière sur le cadre rotatif et qui sont disposées à intervalles sur des côtés gauche et droit ;
un corps à bascule qui est soutenu de manière rotative horizontalement par le cadre rotatif en face de la première plaque verticale et de la deuxième plaque verticale et qui soutient le dispositif de travail ;
un vérin hydraulique (38) qui est disposé sur un côté extérieur d'un corps de machine sur un côté opposé au côté de deuxième plaque verticale par rapport à la première plaque verticale sur le cadre rotatif, et qui a une partie d'extrémité couplée au corps à bascule ; et
une plaque verticale auxiliaire (148) disposée entre la première plaque verticale et le vérin hydraulique sur le cadre rotatif et couplée à une autre partie d'extrémité du vérin hydraulique.

2. Machine de travail selon la revendication 1, dans laquelle
la plaque verticale auxiliaire inclut une partie de couplage présentant une structure de couplage pour coupler une autre partie d'extrémité du vérin hydraulique, et
la partie de couplage fait saillie vers le haut par rapport à la première plaque verticale dans une vue de côté dans une direction gauche et droite.

3. Machine de travail selon la revendication 1 ou 2, dans laquelle une partie d'extrémité avant de la plaque verticale auxiliaire est connectée à la première plaque verticale.

4. Machine de travail selon la revendication 1, comprenant en outre :
une unité de batterie qui chevauche la deuxième plaque verticale dans une vue en plan ;
un moteur électrique qui utilise la puissance électrique de l'unité de batterie comme une alimentation de puissance et qui chevauche la première plaque verticale dans une vue en plan ; et
une pompe hydraulique qui est entraînée par le moteur électrique et qui chevauche la plaque verticale auxiliaire dans une vue en plan.

5. Machine de travail selon la revendication 4, dans laquelle le vérin hydraulique est disposé en face de la pompe hydraulique.

6. Machine de travail selon la revendication 5, comprenant en outre, en face de la pompe hydraulique, un réservoir d'huile hydraulique qui stocke l'huile hydraulique déchargée par la pompe hydraulique,
dans laquelle le vérin hydraulique passe à travers une partie d'encoche fournie dans le réservoir d'huile hydraulique.

7. Machine de travail selon la revendication 6, dans laquelle le vérin hydraulique est disposé entre la plaque verticale auxiliaire et une paroi de côté d'une partie du réservoir d'huile hydraulique, la partie étant fournie avec la partie d'encoche.

8. Machine de travail selon la revendication 7, dans laquelle la plaque verticale auxiliaire soutient une paroi inférieure d'une partie du réservoir d'huile hydraulique, la partie étant fournie avec la partie d'encoche.
